# EUROPÄISCHE PATENTANMELDUNG

(11) **EP 3 839 815 A1**
(43) Veröffentlichungstag der Anmeldung: **23.06.2021**
(21) Anmeldenummer: 20214329.3
(22) Anmeldetag: 15.12.2020
(51) Int. Cl.: G06K 9/00

(54) **VORRICHTUNG UND VERFAHREN ZUM BESTIMMEN EINES BIOMETRISCHEN MERKMALS EINES GESICHTS EINER PERSON**

(30) Priorität: 19.12.2019 DE 102019135107
(71) Anmelder: Bundesdruckerei GmbH, 10969 Berlin (DE)
(72) Erfinder: RABELER, Uwe, 30453 Hannover (DE); WOLF, Andreas, 13158 Berlin (DE)
(74) Vertreter: Bittner, Thomas L.

(57) **Zusammenfassung**

Die Erfindung betrifft eine Vorrichtung zum Bestimmen eines biometrischen Merkmals eines Gesichts einer Person mit: einer Kameraeinrichtung (103), die eingerichtet ist, Bilddaten für Bildaufnahmen eines Gesichts einer Person bereitzustellen; einer 3D-Sensoreinrichtung (120), die eingerichtet ist, digitale Messdaten betreffend eine räumliche Lage des Kopfes der Person zu erfassen; und einer Auswerte- und / oder Steuereinrichtung (108), die mit der Kameraeinrichtung (103) und der 3D-Sensoreinrichtung (120) zum Austauschen von Daten verbunden und eingerichtet ist, die Bilddaten von der Kameraeinrichtung (103) zu empfangen; die digitale Messdaten von der 3D-Sensoreinrichtung (120) zu empfangen; unter Verwendung der digitalen Messdaten eine relative Lage von Kameraeinrichtung (103) und Gesicht (110) der Person zueinander zu bestimmen; eine Fehlerprüfung auszuführen, bei der bestimmt wird, ob bezüglich der relativen Lage von Kameraeinrichtung (103) und Gesicht (110) der Person eine Abweichung von einer relativen Sollpositionierung vorliegt; und unter Verwendung der Bilddaten ein biometrisches Merkmal für das Gesicht (110) zu bestimmen, wobei hierbei eine automatische Datenkorrektur angewendet wird, wenn bei der Fehlerprüfung die Abweichung von der relativen Sollpositionierung von Kameraeinrichtung und Gesicht (110) der Person festgestellt wird. Weiterhin ist ein Verfahren zum Bestimmen eines biometrischen Merkmals eines Gesichts einer Person vorgesehen.

## Beschreibung

Die Erfindung betrifft eine Vorrichtung und ein Verfahren zum Bestimmen eines biometrischen Merkmals eines Gesichts einer Person.

### Hintergrund

Eine Herausforderung bei Vorrichtungen zum Erfassen biometrischer Merkmale besteht darin, ein Bild zu erzeugen, welches möglichst frei von Abbildungsfehlern ist. Die biometrischen Merkmale des Gesichts einer Person sind deutlich zu erfassen. Dies spielt insbesondere eine Rolle im Bereich der manuellen, von Personen durchgeführten und automatisierten Gesichtserkennung bei Grenzkontrollen. Die automatisierten Systeme, ABC-Systeme (ABC - "*Automated Border Control*") werden häufig an Flughäfen eingesetzt, um die Identität einer Person zweifelsfrei feststellen zu können (in Deutschland: "EasyPASS"). Dabei wird das Passbild einer Person automatisch mit der Person selbst bzw. mit einem von der Person erfassten Bild verglichen. Die auftretenden Abbildungsfehler können zu Falschrückweisungen bei der automatisierten Kontrolle führen, was eine wiederholte automatische, oder eine manuelle, d.h. menschliche Überprüfung beispielsweise durch einen Grenzpolizisten erfordert. Diese Praxis wird als zeit- und kostenintensiv eingestuft und stellt darüber hinaus ein Sicherheitsrisiko dar.

Um die Anzahl solcher manueller Prüffälle oder die Anzahl an automatischen Falschrückweisungen zu reduzieren, ist es bereits bei der Erstellung des Passbildes notwendig, dass dieses eine hohe Bildqualität aufweist. Auch der automatisierte Abgleich bei ABC-Systemen ist mit einer hohen Bildqualität durchzuführen. Vermehrt wird bei der Erstellung der Passbilder nicht mehr auf einen professionellen Fotografen, sondern auf Passbildautomaten zurückgegriffen, deren Bildqualität aber häufig schlecht ist aufgrund der Abbildungsfehler einerseits und aufgrund der fehlerhaften Haltung des Benutzers bzw. der häufig nicht optimalen Benutzerführung andererseits.

Eine Vorrichtung zur Erfassung biometrischer Merkmale einer Person ist beispielsweise aus dem Dokument DE 10 2014 112 494 A1 bekannt. Die darin gezeigte Vorrichtung umfasst eine Kamera und zwei Spiegelanordnungen. Die erste Spiegelanordnung dient der Faltung eines zwischen dem zu erfassenden Gesicht der Person und der Kamera verlaufenden Strahlenganges. Die zweite Spiegelanordnung umfasst einen semitransparenten Spiegel, der Licht transmittiert zur Erfassung des Gesichts mittels der Kamera und der Licht reflektiert zur Spiegelung des Gesichts der Person.

Eine Vorrichtung zum Erfassen biometrischer Merkmale des Gesichts einer Person ist beispielsweise dem Dokument DE 10 2017 115 136 A1 zu entnehmen. Die darin beschriebene Vorrichtung hat sich bereits als sehr zuverlässig herausgestellt und gut bewährt. Eine solche Vorrichtung kann an einer räumlich beengten Grenzkontrollstelle, beispielsweise an Flughäfen, oder in engen Räumlichkeiten von Behörden Verwendung finden. Dennoch sollte gewährleistet sein, dass das Sicherheitspersonal einen möglichst weitreichenden Überblick über den Raum behalten kann, um etwaige Gefahren frühzeitig zu erkennen. Zudem variiert an Grenzkontrollstellen oder in Behördengebäuden die Beleuchtungssituation, so dass unterschiedliche Lichtverhältnisse bei der optischen Erfassung des Gesichts vorliegen können. Porträtfotos sind bei eingangs erwähnten Vorrichtungen entsprechend den Anforderungen der ISO 19794-5 (erste Edition, ausgegeben 2005) für Gesichtsbilder anzufertigen. Diese Norm fordert eine schattenfreie Ausleuchtung des Gesichts vor einem neutralen Hintergrund, der ebenfalls von Schatten freizuhalten ist. Eine spätere Freistellung des Gesichtsbilds mittels einer Software zur Bildbearbeitung ist nicht gestattet; wird also von der Norm untersagt.

Das Dokument US 2008/0292151 A1 beschreibt ein Verfahren zum Aufnehmen von Bildern eines Individuums für das Bestimmen des Wohlbefindens dieses Individuums. Hierzu werden physiologische Ausgangsdaten für das Individuum und Zustands-Ausgangsdaten für das Individuum bestimmt. Die Anwesenheit des Individuums in der Bildaufnahme-Umgebung wird bestimmt und identifiziert. Mit dem Individuum verknüpfte semantische Daten werden bereitgestellt. Eines oder mehrere Bilder des Individuums werden während eines Aufnahmeereignisses aufgenommen und die während des Aufnahmeereignisses herrschenden Aufnahmebedingungen werden bestimmt. Anhand der Ereignis-Aufnahmebedingungen, der physiologischen Ausgangsdaten für das Individuum und der Zustands-Ausgangsdaten für das Individuum wird die Annehmbarkeit der aufgenommenen Ereignis-Bilder bestimmt. Die annehmbaren Bilder und die semantischen Daten werden für das Bestimmen des Wohlbefindens des Individuums verwendet.

Auch besteht das Bedürfnis, dass die Vorrichtung eingesetzt werden kann bei einem breiten Größenspektrum der Personen, um deren biometrischen Merkmale des Gesichts zu erfassen und ggfs. zu verarbeiten.

### Zusammenfassung

Aufgabe der Erfindung ist es, eine Vorrichtung und ein Verfahren zum Bestimmen eines biometrischen Merkmals eines Gesichts einer Person anzugeben, mit denen Fehler bei der Bildaufnahme, welche das Bestimmen des biometrischen Merkmals behindern, vermieden werden.

Zur Lösung sind eine Vorrichtung und ein Verfahren zum Bestimmen eines biometrischen Merkmals eines Gesichts einer Person nach den unabhängigen Ansprüchen 1 und 6 geschaffen. Ausgestaltungen sind Gegenstand von abhängigen Unteransprüchen.

Nach einem Aspekt ist eine Vorrichtung zum Bestimmen eines biometrischen Merkmals eines Gesichts einer Person geschaffen, die Folgendes aufweist: einer Kameraeinrichtung, die eingerichtet ist, Bilddaten für Bildaufnahmen eines Gesichts einer Person bereitzustellen; einer 3D-Sensoreinrichtung, die eingerichtet ist, digitale Messdaten betreffend eine räumliche Lage des Kopfes der Person zu erfassen; und einer Auswerte- und / oder Steuereinrichtung, die mit der Kameraeinrichtung und der 3D-Sensoreinrichtung zum Austauschen von Daten verbunden ist. Die Auswerte- und / oder Steuereinrichtung ist für Folgendes eingerichtet: die Bilddaten von der Kameraeinrichtung zu empfangen; die digitale Messdaten von der 3D-Sensoreinrichtung zu empfangen; unter Verwendung der digitalen Messdaten eine relative Lage von Kameraeinrichtung und Gesicht der Person zueinander zu bestimmen; eine Fehlerprüfung auszuführen, bei der bestimmt wird, ob bezüglich der relativen Lage von Kameraeinrichtung und Gesicht der Person eine Abweichung von einer relativen Sollpositionierung vorliegt; und unter Verwendung der Bilddaten ein biometrisches Merkmal für das Gesicht zu bestimmen, wobei hierbei eine automatische Datenkorrektur angewendet wird, wenn bei der Fehlerprüfung die Abweichung von der relativen Sollpositionierung von Kameraeinrichtung und Gesicht der Person festgestellt wird.

Nach einem weiteren Aspekt ist ein Verfahren zum Bestimmen eines biometrischen Merkmals eines Gesichts einer Person geschaffen, Folgendes aufweisen: Erzeugen von Bilddaten in einer Kameraeinrichtung, die Bildaufnahmen eines Gesichts einer Person anzeigen; Erzeugen von digitalen Messdaten betreffend eine räumliche Lage des Kopfes der Person mittels einer 3D-Sensoreinrichtung; und Auswerten der Bilddaten und der digitalen Messdaten in einer Auswerte- und / oder Steuereinrichtung, die mit der Kameraeinrichtung und der 3D-Sensoreinrichtung verbunden ist. Das Auswerten der Bilddaten und der digitalen Messdaten umfasst weiterhin Folgendes: Empfangen der Bilddaten von der Kameraeinrichtung; Empfangen der digitalen Messdaten von der 3D-Sensoreinrichtung; Bestimmen einer relativen Lage von Kameraeinrichtung und Gesicht der Person zueinander unter Verwendung der digitalen Messdaten; Ausführen einer Fehlerprüfung, bei der geprüft wird, ob bezüglich der relativen Lage von Kameraeinrichtung und Gesicht der Person eine Abweichung von einer relativen Sollpositionierung vorliegt; und Bestimmen eines biometrischen Merkmals für das Gesicht unter Verwendung der Bilddaten, wobei hierbei eine automatische Datenkorrektur angewendet wird, wenn bei der Fehlerprüfung die Abweichung von der relativen Sollpositionierung von Kameraeinrichtung und Gesicht der Person festgestellt wird.

Die Vorrichtung kann zum Beispiel als eine Zugangskontrollvorrichtung mit optischer Erfassungsmöglichkeit biometrischer Merkmale eines Gesichts einer Person ausgestaltet sein.

Mittels den vorgeschlagenen Technologien lassen sich Abbildungsfehler minimieren und zum Beispiel Passbilder nach den Vorgaben der ISO 19794-5 (erste Edition, ausgegeben 2005) für Gesichtsbilder mit verbesserter Qualität erstellen, wobei ein Mindestabstand zwischen der Kamera und dem Gesicht oder eine Mindestlänge des Strahlengangs von etwa 120 Zentimetern (cm) eingehalten werden kann. Eine optische Weglänge zwischen der Kamera und dem Gesicht kann zwischen etwa 120 Zentimetern und etwa 180 Zentimetern liegen, alternativ zwischen etwa 140 Zentimetern und etwa 160 Zentimetern, insbesondere etwa 150 Zentimetern.

Als biometrische Merkmale kommen beispielsweise die Farb- und / oder Formgebung der Iriden, der Augenabstand, die Stirnhöhe, die Form und Lage des Mundes, die Form und Lage der Nase und der Wangenknochen, die Anordnung der Blutgefäße etc. in Betracht.

Die Auswerte- und / oder Steuereinrichtung kann eingerichtet sein, bei der Fehlerprüfung zu bestimmen, ob ein Parallaxenfehler für Kameraeinrichtung und Gesicht der Person vorliegt, und die automatische Datenkorrektur den Parallaxenfehler korrigierend auszuführen, wenn dieser bei der Fehlerprüfung festgestellt wird.

Bei einer Ausgestaltung kann die Auswerte- und / oder Steuereinrichtung eingerichtet sein, bei der Fehlerprüfung zu bestimmen, ob eine Aufnahmerichtung der Kameraeinrichtung von der Frankfurter Horizontalen für die Person abweicht.

Die Auswerte- und / oder Steuereinrichtung kann weiterhin eingerichtet sein, in Abhängigkeit vom Ergebnis der Fehlerprüfung Benutzerhinweisdaten, die Benutzerhinweise an die Person anzeigen, zu erzeugen und über eine Ausgabeeinrichtung an die Person auszugeben, wobei die Benutzerhinweisdaten wenigstens einen Benutzerhinweis aus der folgenden Gruppe anzeigen: Kopfabstand zur Kameraeinrichtung vergrößern, Kopfabstand zur Kameraeinrichtung verkleinern, Kopfneigung verändern und Kopf drehen. Wenn bezüglich der relativen Lage von Kameraeinrichtung und Gesicht der Person eine Abweichung von einer relativen Sollpositionierung vorliegt, erfolgt ein Hinweise an die Person mittels Audio- und / oder Bilddaten über die Ausgabeeinrichtung. Danach kann die Prüfung für die relative Lage wiederholt werden. Falls immer noch eine Abweichung festgestellt wird, kann der Ablauf wiederholt werden, bis die Abweichung gar nicht mehr besteht oder innerhalb einer vorgegebenen Fehlertoleranz liegt. Es kann eine Hinweise zur Korrektur des Parallaxenfehlers ausgegeben werden.

Die Auswerte- und / oder Steuereinrichtung kann eingerichtet sein, in Abhängigkeit vom Ergebnis der Fehlerprüfung Steuerdaten zu erzeugen und an eine Höheneinstelleinrichtung der Kameraeinrichtung zugeben, derart, dass die Steuerdaten eine automatische Höhenverstellung der Kameraeinrichtung relativ zum Kopf der Person bewirken.

Die Auswerte- und / oder Steuereinheit kann ausgebildet sein, eine in Abhängigkeit der Verdrehung hervorgerufene Trapezverzerrung der Aufnahme zu entzerren. Dies minimiert den konstruktiven Aufwand der Vorrichtung, da die Rotationseinrichtung dann ausschließlich den Spiegel verdrehen kann, um auch besonders große oder besonders kleine Personen erfassen zu können, während die anderen Komponenten der Vorrichtung in ihrer räumlichen Lage festgehalten sind. Eine verzerrungsfreie Portraitaufnahme des Gerichts der Person lässt sich auch dann betriebssicher erstellen, wenn die Rotationseinrichtung ausgebildet ist, außerdem die Kamera in Abhängigkeit der erfassten Lage des Gesichts zu verdrehen, insbesondere in einer gemeinsamen Baugruppe mit dem optischen Spiegel.

Zudem ist die Möglichkeit eröffnet, dass die Auswerte -und / oder Steuereinheit ausgebildet ist, drahtlos oder drahtgebunden in einer Kommunikationsverbindung mit einer digitalen Anzeige zu stehen, welche als digitaler Spiegel ausgeführt sein kann und eingerichtet ist, das von der Kamera erfasste Bild anzuzeigen. Die Rotationseinrichtung kann zusätzlich derart ausgebildet sein, außerdem den digitalen Spiegel (Anzeige) in Abhängigkeit der erfassten Lage des Gesichts zu verdrehen. Damit ist gewährleistet, dass sich die abzulichtende Person stets selbst sehen kann und nicht aufgrund der Rotation der einzelnen Komponenten ihr eigenes Gesichtsbild nur undeutlich oder überhaupt nicht wahrnehmen kann.

Die 3D-Sensoreinrichtung kann eingerichtet sein, digitale Messdaten betreffend eine räumliche Lage des Kopfes der Person mittels eines time-of-flight- (TOF) Verfahrens zu erfassen. Alternativ oder zusätzlich kann die 3D-Sensoreinrichtung ein Stereo-Kamerasystem aufweisen. Die 3D-Sensoreinrichtung kann in der Vorrichtung unbeweglich angeordnet sein. Alternativ kann die 3D-Sensoreinrichtung in der Vorrichtung beweglich angeordnet sein. Beispielsweise kann die 3D-Sensoreinrichtung relativ zu der Kameraeinrichtung feststehend angeordnet und mittels der Höheneinstelleinrichtung der Kameraeinrichtung zusammen mit der Kameraeinrichtung beweglich sein.

Die Rotationseinrichtung kann ausgebildet sein, eine Beleuchtungseinrichtung in Abhängigkeit der erfassten Lage des Gesichts zu verdrehen, da dann eine schattenfreie Ausleuchtung des Gesichts von Personen unterschiedlichster Größe möglich ist. Das Verdrehen der Beleuchtungseinrichtung bringt außerdem den Vorteil mit sich, dass dadurch auch bewusst Schatten erzeugt werden können, um eine Täuschungserkennung durchzuführen.

Für die Rotationseinrichtung kann vorgesehen sein, Rotationen mit einem einzigen Rotationsfreiheitsgrad auszuführen, wobei diese Rotation vorzugsweise zusätzlich durch Anschläge beidseits begrenzt ist, sodass die Rotationseinrichtung die einzelne Komponente oder die mehreren Komponenten zwischen den beiden Anschlägen beschränkt verschwenken kann.

In diesem Zusammenhang hat es sich als sinnvoll herausgestellt, wenn eine Rotation um eine senkrecht bezüglich dem Strahlengang orientierte Rotationsachse gegeben ist. Damit ist der Vorteil verbunden, dass Personen unterschiedlichster Größe mit der Vorrichtung aufgezeichnet werden können und deren biometrischen Merkmale des Gesichts erfassbar sind.

Um neben einer bloßen eindimensionalen Schwenkbewegung in vertikaler Richtung zusätzlich eine horizontale Schwenkbewegung zur Verfügung stellen zu können, hat es sich als sinnvoll erwiesen, wenn die Rotationseinrichtung ausgebildet ist, Rotationen mit genau zwei Rotationsfreiheitsgraden auszuführen, wobei eine senkrecht bezüglich dem Strahlengang orientierte erste Rotationsachse vorliegt, und wobei eine senkrecht bezüglich der ersten Rotationsachse orientierte zweite Rotationsachse vorliegt. Auch in horizontaler Richtung kann die Rotation durch zwei Anschläge begrenzt sein, so dass auch in horizontaler Richtung eine Schwenkbewegung zwischen den beiden Anschlägen möglich ist. Das Verschwenken erfolgt dabei also nicht nur in vertikaler, sondern auch in horizontaler Richtung, womit auch unterschiedlich breite Personen mittels der Vorrichtung erfassbar sind.

Außerdem ist es möglich, dass im Gehäuse eine Hubeinrichtung vorhanden ist, die ausgebildet ist, die Rotationseinrichtung und / oder den optischen Spiegel und / oder die Kamera in der horizontalen Lage, insbesondere parallel zur Gehäusefront, zu verstellen. Dadurch lässt sich ebenfalls sicherstellen, dass das Gesicht von unterschiedlich großen Personen von der Vorrichtung zentriert abgebildet wird. Es kann zur einfacheren Justage und zur Vermeidung von optischen Fehleinstellungen bevorzugt sein, wenn das Gehäuse selbst beispielsweise an einer Stange oder Wand horizontal und / oder vertikal (ggfs. motorisch) verstellbar angebracht ist.

Wenn eine Überwachung des Erfassungsvorgangs des Gesichts der Person nicht durch geschultes Personal erfolgen kann, so hat sich der Einsatz von Mitteln zur Täuschungserkennung bewährt. Es kann daher vorgesehen sein, dass die Vorrichtung außerdem einen Sensor zur Täuschungserkennung umfasst.

Ein solcher Sensor kann beispielsweise mit einem Wärmebildkamera gebildet sein, die vorzugsweise ausgebildet ist, ein Wärmebild eines Gesichtsbereichs der Person aufzunehmen, wobei ein Prozessor oder die Auswerte- und / oder Steuereinheit ausgebildet ist, eine örtliche Wärmeinhomogenität in einem vorbestimmten Erfassungsbereich des Wärmebilds zu detektieren. Alternativ oder ergänzend kann der Sensor als eine Nahinfrarot-Kamera (NIR-Kamera) gebildet sein, um die *"Presentation Attack Detection"* (PAD) durchzuführen. Anhand eines durch eine NIR-Kamera aufgenommenen NIR-Bildes kann unterschieden werden, ob das Bild eine reale Person darstellt oder lediglich ein auf einem Wiedergabegerät (zum Beispiel einem Smartphone oder einem Tablet) dargestelltes Abbild einer Person zeigt.

Es kann eine Übersichtskamera mit einer zweiten Brennweite vorgesehen sein, wobei die Länge eines zweiten Strahlengangs zwischen der Übersichtskamera und dem Gesicht der Person kleiner ist als die Länge des Strahlengangs zwischen der Kamera und dem Gesicht der Person. Während die Länge des ersten Strahlenganges zwischen dem Gesicht und der Kamera etwa 150 Zentimeter beträgt, liegt die Länge des zweiten Strahlengangs zur Übersichtskamera vorzugsweise in einem Bereich zwischen etwa 90 cm bis etwa 130 cm. Mit Hilfe der Übersichtskamera lässt sich ein Übersichtsbild erstellen und es können die Position und die Haltung des Kopfes der Person überprüft werden. Hierzu ist die Übersichtskamera vorzugsweise ebenfalls mittels einer Kommunikationsverbindung mit der Auswerte- und / oder Steuereinheit verbunden oder mit dieser verbindbar.

Weil der zweite Strahlengang oder die zweite optische Weglänge vom Gesicht zur Übersichtskamera kürzer ist als die Länge des Strahlengangs zwischen dem Gesicht und der Kamera, lässt sich durch die unterschiedlichen Abbildungseigenschaften des durch die Übersichtskamera und des durch die Kamera aufgenommenen Bildes eine Tiefeninformation ermitteln. Mit dieser Tiefeninformation und ggfs. unter Zuhilfenahme der Auswerte- und / oder Steuereinheit lässt sich dann eine dreidimensionale Information über das Gesicht bzw. den Kopf generieren. Anhand dieser dreidimensionalen Information kann im Rahmen der Täuschungserkennung festgestellt werden, ob das abzubildende Objekt dreidimensional oder zweidimensional ist; ob es sich also lediglich um ein Abbild einer Person und damit um keine "echte" Person handelt.

Mit den dreidimensionalen Daten kann aber auch eine Überprüfung des Abstandes des Kopfes von der Kamera und / oder der Übersichtskamera erfolgen. Die erste Brennweite der Kamera und die zweite Brennweite der Übersichtskamera können dabei vorzugsweise gleich oder unterschiedlich sein. Durch den Einsatz unterschiedlicher Brennweiten oder mittels unterschiedlicher Schärfe-Einstellungen der Kamera können unterschiedliche Referenzbilder mit unterschiedlichen Bildaufnahmeszenarien zur Personenidentifikation erzeugt werden.

Der optische Spiegel kann zumindest teildurchlässig und derart angeordnet ist, dass das durch den optischen Spiegel reflektierte Licht auf die Kamera und das durch den optischen Spiegel transmittierte Licht auf die Übersichtskamera gelenkt ist. Der optische Spiegel kann als semitransparenter Spiegel oder alternativ auch als Strahlteiler gebildet sein. Ist der optische Spiegel als Strahlteiler gebildet, so ist es insbesondere vorteilhaft ist, wenn der optische Spiegel als 50 / 50 Strahlteiler gebildet ist, bei welchem ein Anteil von 50 % der Intensität des auftreffenden Lichts reflektiert und ein komplementärer Anteil von ebenfalls 50 % der Intensität des auftreffenden Lichts durchgelassen wird. Alternativ kann der Strahlteiler auch Licht in einem bestimmten Wellenlängenbereich transmittieren und Licht eines anderen Wellenlängenbereichs reflektieren; oder die Strahlteilung erfolgt anhand der entsprechenden Polarisation des Lichtes. Durch eine Anordnung der Übersichtskamera auf einer der Gehäusefront abgewandten Seite des teildurchlässigen Spiegels kann außerdem ein kompakter Aufbau realisiert werden (aus der Sicht eines Benutzers ist dann die Übersichtskamera also hinter dem und auf Höhe des optischen Spiegels angeordnet). Darüber hinaus sind die Justage und die Höheneinstellung des Gehäuses und / oder der Kamera inkl. der Übersichtskamera vereinfacht.

Außerdem ist es bevorzugt, wenn im Gehäuse eine optische Brillendetektionseinheit vorgesehen ist. Brillen erzeugen bei Abbildungen häufig Reflexe, die die Qualität der Abbildung verschlechtern. Die Brillendetektionseinheit kann eine UV-Lichtquelle zur Aussendung von Ultraviolettstrahlung in Richtung der Person und einen UV-Detektor zur Detektion von Ultraviolettstrahlung, die von der Person reflektiert oder gestreut wird. In der Regel reflektieren (teilweise auch absorbieren) Brillengläser Licht im ultravioletten Bereich bis etwa 350 nm. Erst Licht mit größerer Wellenlänge und insbesondere sichtbares Licht wird von den Brillengläsern transmittiert. Diese Erkenntnis wird genutzt, um anhand der charakteristischen Remission des UV-Lichts von Brillengläsern festzustellen, ob die Person eine Brille trägt oder nicht. Wird eine Brille detektiert, so kann dann durch Anpassung der Beleuchtungseinheit die Entstehung von Reflexen verhindert werden. Alternativ kann zum Beispiel über den als Bedieneinheit gebildeten digitalen Spiegel auch ein grafischer oder akustischer Hinweis ausgegeben werden, der die Person veranlasst, die Brille für den Erstellungsprozess des Bildes oder für den Identifikationsprozess abzunehmen. Die Brillendetektionseinheit kann alternativ oder ergänzend eine Time-of-flight-Kamera wie eine MS-Kinect®-Kamera umfassen. Beispielsweise können hierbei mit Hilfe der Time-of-flight-Kamera die für Brillengläser vordefinierten Charakteristika im Tiefenprofil des Gesichtsbildes bestimmt oder erfasst werden. Solche Charakteristika können dabei insbesondere die beiden durch die Brillengläser hervorgerufenen nahezu ebenen Flächen beidseits der Nase sein.

Die digitale Anzeige kann eine Bedieneinheit aufweisen, die insbesondere als ein Touchscreen gestaltet ist, auf dem das durch die Kamera erfasste Bild anzeigbar ist. Somit kann die Person oder der Benutzer das durch die Kamera zu erfassende Bild am digitalen Spiegel, mithin am Display bzw. am Touchscreen, in Echtzeit betrachten, bevor die Aufzeichnung des Fotos oder des Passbildes erfolgt. Die Verdrehung des digitalen Spiegels mittels der Rotationseinrichtung und / oder ein vertikales Versetzen desselben nach unten oder nach oben zwingt die abzulichtende Person zu einer Kopfneigung, was Reflexionen durch Brillengläser im Gesichtsbild vorbeugt.

Um verzerrungsfreie Portraitaufnahmen von Personen unabhängig von ihrer Körpergröße oder ihrer Sitzhöhe erstellen zu können, hat es sich als sinnvoll erwiesen, wenn in Abhängigkeit der Verdrehung des optischen Spiegels eine dadurch entstandene Trapezverzerrung mittels der Auswerte- und / oder Steuereinheit entzerrt wird, womit dann ein verzerrungsfreies Gesichtsbild der Person vorliegt.

Um aber ein nachträgliches Entzerren zu vermeiden, hat es sich als sinnvoll erwiesen, wenn der optische Spiegel zusammen mit der Kamera mittels der Rotationseinrichtung in Abhängigkeit der erfassten Lage des Gesichts verdreht wird. Vorzugsweise erfolgt dabei das Verdrehen der Kamera und des optischen Spiegels als gemeinsame Baugruppe, wobei die relative Lage zwischen dem optischen Spiegel und der Kamera unverändert bleibt.

Zusätzlich ist die Möglichkeit eröffnet, dass die Rotationseinrichtung ausgebildet ist, außerdem einen digitalen Spiegel in Abhängigkeit der erfassten Lage des Gesichts zu verdrehen, an welchem das von der Kamera erfasste Bild ausgegeben oder angezeigt wird. Auch hierbei besteht die Möglichkeit, den digitalen Spiegel in einer gemeinsamen Baugruppe mit dem optischen Spiegel und / oder mit der Kamera zu verdrehen, sodass auch dessen relative Lage bezüglich der weiteren Komponenten festgelegt ist. Entsprechendes gilt für eine Beleuchtungseinrichtung, die ggfs. mit mehreren Beleuchtungseinheiten ausgestattet ist. Auch die Beleuchtungseinrichtung kann dann mittels der Rotationseinrichtung in Abhängigkeit der erfassten Lage des Gesichts der Person verdreht werden.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer Vorrichtung zum Erfassen biometrischer Merkmale eines Gesichts einer Person und
- Fig. 2: ein Ablaufdiagramm für ein Ausführungsbeispiel eines Verfahrens zum Bestimmen eines biometrischen Merkmals eines Gesichts einer Person.

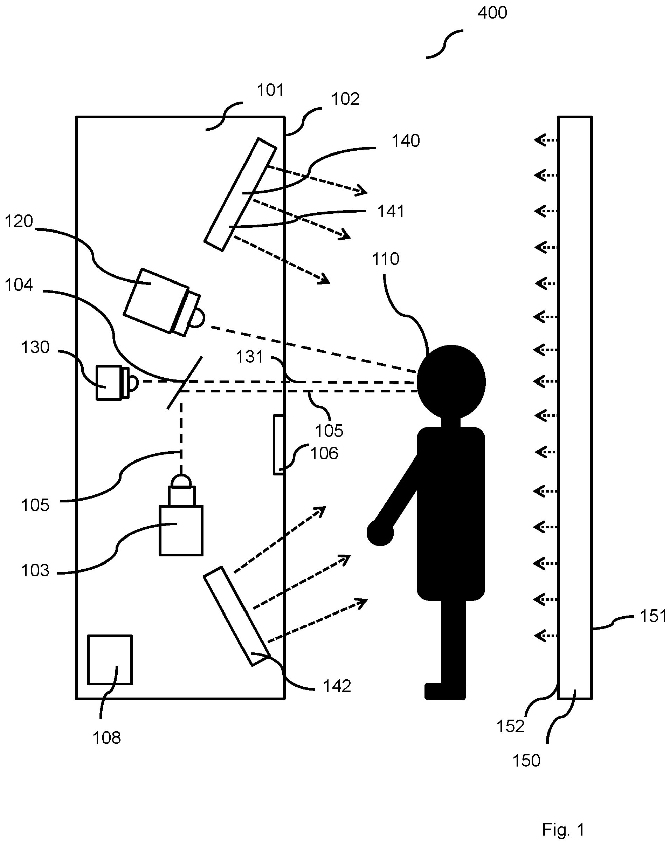

Fig. 1 zeigt schematisch eine Anordnung 400 mit einer Vorrichtung 100 zum Erfassen von biometrischen Merkmalen eines Gesichts 110 einer Person. Die Vorrichtung 100 weist ein Gehäuse 101 auf, welches mit einer der Person zugewandten Gehäusefront 102 gebildet ist. In dem Gehäuse 101 ist eine Kamera 103 zum Erfassen von Gesichtsbilddaten für das Gesicht 110 der Person angeordnet, die auf einen optischen Spiegel 104 gerichtet ist. Die Kamera 103 weist eine erste Brennweite auf. Die Blickrichtung der Kamera 103 ist im Wesentlichen parallel zu einer durch die Gehäusefront 102 definierten Ebene orientiert. Der ebenfalls im Gehäuse 101 angeordnete optische Spiegel 104 dient der Faltung eines zwischen dem Gesicht 110 der Person und der Kamera 103 verlaufenden, gestrichelt dargestellten Strahlengangs 105. Hierzu lenkt der optische Spiegel 104 das durch eine Gehäuseöffnung bzw. durch einen transparenten Abschnitt in der Gehäusefront 102 einfallende Licht auf die Kamera 103. Er ist im gezeigten Ausführungsbeispiel um etwa 45 Grad gegenüber der durch die Gehäusefront 102 vorgegebenen Ebene geneigt angeordnet.

Außerdem ist eine digitaler Anzeige 106 vorgesehen, die als digitaler Spiegel ausgeführt sein kann und eingerichtet ist, das von der Kamera 103 erfasste Bild anzuzeigen. Um den Benutzer zu einer zumindest leicht geneigten Haltung des Kopfes zu zwingen, ist die digitale Anzeige 106 vertikal nach unten versetzt bezüglich des Strahlenganges 105 angeordnet.

Der digitale Anzeige 106 mit einer Bedieneinheit 107 ausgestaltet sein, die einen Touchscreen oder ein Touchpanel aufweisen kann und mit einer Auswerte- und / oder Steuereinheit 108 in Form eines Computers verbunden ist. Alternativ weist die Bedieneinheit 107 auch einen eigenständigen Prozessor (bspw. einen Mikroprozessor) auf, vorzugsweise mit einem in dessen Speicher abgelegten und ausführbaren Echtzeitbetriebssystem (RTOS - *Real-Time Operating System*) und einer oder mehrerer Software-Anwendungen zur Gesichtsbilderfassung.

Zwischen der Bedieneinheit 107 und der Auswerte- und / oder Steuereinheit 108 ist im Betrieb der Vorrichtung 100 eine Kommunikationsverbindung ausgebildet, welche drahtgebunden oder drahtlos (beispielweise Bluetooth, WLAN, NFC, etc.) ausgeführt sein kann. Die Auswerte- und / oder Steuereinheit 108 steht weiterhin in einer drahtgebundenen oder drahtlosen Kommunikationsverbindung mit der Kamera 103. Somit können die von der Kamera 103 erfassten Bilder, vorzugsweise in Echtzeit, mit Hilfe des Computers auf der digitalen Anzeige 106, mithin auf dem Touchscreen ausgegeben werden.

Die Vorrichtung 100 weist eine Beleuchtungseinrichtung 140 auf, die beim gezeigten Ausführungsbeispiel eine erste Beleuchtungseinheit 141 und eine zweite Beleuchtungseinheit 142 aufweist. Es kann vorgesehen sein, dass mehr als zwei der Beleuchtungseinheiten 141, 142 vorhanden sind. Um eine schattenfreie Ausleuchtung des Gesichts 110 und bei Brillenträgern eine reflexionsfreie Aufnahme zu gewährleisten, ist die erste Beleuchtungseinheit 141 in einer ersten Richtung, insbesondere nach oben, vertikal versetzt bezüglich des Strahlengangs 105 angeordnet, wobei die zweite Beleuchtungseinheit 142 in einer von der ersten Richtung abweichenden zweiten Richtung, insbesondere nach unten, vertikal versetzt bezüglich dem Strahlengang 105 angeordnet ist. Die erste Beleuchtungseinheit 141 ist insbesondere vollständig oberhalb des optischen Spiegels 104 angeordnet. Die zweite Beleuchtungseinheit 142 ist insbesondere vollständig unterhalb des optischen Spiegels 104 angeordnet. Das von den Beleuchtungseinheiten 141, 142 emittierte Licht ist in Fig. 1 mittels punktierter Pfeile illustriert.

Die Vorrichtung 100 weist außerdem eine (optionale) Übersichtskamera 130 zum Aufzeichnen eines oder mehrerer Übersichtsbilder auf, welche eine zweite Brennweite aufweist. Die Länge eines zweiten Strahlengangs 131, d.h. einer zweiten optischen Weglänge zwischen der Übersichtskamera 130 und dem Gesicht 110 der Person ist dabei kleiner als die Länge des Strahlengangs 105 zwischen der Kamera 103 und dem Gesicht 110 der Person. Das Übersichtsbild lässt sich durch eine Gehäuseöffnung oder einen transparenten Abschnitt in der Gehäusefront 102 aufnehmen. Die Übersichtskamera 130 ist vorliegend auf der der Gehäusefront 102 abgewandten Seite des optischen Spiegels 104 angeordnet, wahlweise hinter diesem. Der optische Spiegel 104 ist aus diesem Grund zumindest teildurchlässig oder semitransparent gebildet und derart angeordnet, dass das durch den optischen Spiegel 104 reflektierte Licht auf die Kamera 103 und das durch den optischen Spiegel 104 transmittierte Licht auf die Übersichtskamera 130 gelenkt ist. Eine solche Anordnung der Übersichtskamera 130 führt zu einer sehr kompakten Vorrichtung 100. Es besteht jedoch die Möglichkeit, die Übersichtskamera 130 im Gehäuse 101 auf der der Kamera 103 abgewandten Seite, mithin oberhalb, des optischen Spiegels 104 anzuordnen, womit sich das Gehäuse 101 "schlank" halten lässt.

Anhand des mit der Übersichtskamera 130 erstellten Übersichtsbildes kann beispielsweise in der Auswerte- und / oder Steuereinheit 108 die Position und die Lage des Gesichts 110 der Person bestimmt werden. Hierzu steht die Übersichtskamera 130 in einer drahtgebundenen oder drahtlosen Kommunikationsverbindung mit der Auswerte- und / oder Steuereinheit 108. Anhand des Übersichtsbildes kann die Höhenlage des optischen Spiegels 104 angepasst werden, um den "Blick" der Kamera 103 - über den optischen Spiegel 104 - auf das Gesicht 110 der Person zu richten. Vorzugsweise werden anhand des Übersichtsbildes in der Auswerte- und / oder Steuereinheit 108 die Konturen des Gesichts 110 durch eine Randerkennung und / oder eine Farberkennung ermittelt. Nur wenn das Gesicht 110 vollständig abgebildet und zentriert ist, wird der nächste Schritt der Aufnahme eines Gesichtsbilds durch die Kamera 103 durchgeführt.

Mit Hilfe des Übersichtsbilds lässt sich aber auch der Abstand des Gesichts 110 der Person von der Übersichtskamera 130 und damit auch von der Kamera 103 bestimmen. Beispielsweise kann hierzu eine Triangulation genutzt werden, denn wenn mindestens zwei Referenzpunkte durch die Übersichtskamera 130 aufgenommen werden, deren jeweiliger Abstand zur Übersichtskamera 130 bekannt ist, so lässt sich daraus mittels Triangulation der Abstand des Gesichts 110 zur Übersichtskamera 130 ableiten. Aber auch eine als eine Time-of-Flight-Kamera gebildete Übersichtskamera 130 kann zur Abstandsbestimmung eingesetzt werden. Insgesamt wird dadurch gewährleistet, dass das Gesicht 110 der Person nicht zu nahe am optischen Spiegel 104 positioniert ist, was zu einem verfälschten Gesichtsbild führen könnte. Die Abstandsmessung kann zur Kontrolle auch nach der Aufnahme des Gesichtsbildes 110 durch die Kamera 103 erfolgen. Hierbei kann ausgenutzt werden, dass aufgrund der unterschiedlichen Längen der Strahlengänge 105, 131 bzw. der optischen Weglänge zwischen dem Gesicht 110 und der Übersichtskamera 130 und dem Gesicht 110 und der Kamera 103 die Abbildungseigenschaften der jeweiligen Bilder unterschiedlich sind, so dass anhand der unterschiedlichen Abbildungseigenschaften eine Tiefeninformation generiert werden kann. Zudem lässt sich feststellen, ob ein lebender Kopf abgebildet wird. Dies kann erreicht werden, indem mehrere Übersichtsbilder in Serie und / oder mehrere Gesichtsbilder in Serie aufgenommen werden, um zu überprüfen, ob unterschiedliche Gesichtsausdrücke und / oder unterschiedliche Augenpositionen abgebildet wurden. Dies erlaubt den Rückschluss auf einen lebenden Kopf.

Die Vorrichtung 100 kann als eine Kabine, beispielweise in Form eines Selbstbedienungskiosks, ausgestaltet sein. Dieser bildet dann eine erfindungsgemäße Anordnung 400 mit einer Rückwand 150. Um qualitativ hochwertige Gesichtsbilder zur Verwendung in einem Pass erzeugen zu können, ist die der Gehäusefront 102 zugewandte Oberfläche der Rückwand 150 vorzugsweise einfarbig in einer neutralen Farbe gehalten. Alternativ kann die Anordnung 400 auch als ein Terminal zur Erfassung von biometrischen Daten einer Person ausgestaltet sein. Dieses Terminal kann eine Sendeeinheit und eine Empfangseinheit umfassen. Das erfasste Gesichtsbild lässt sich mittels der Sendeeinheit zu einer Behörde senden, wo ein Prüfmodul die Echtheit der biometrischen Daten im Gesichtsbild überprüft und wo ein Komparator die Daten mit in einer Datenbank abgelegten Werten auf Übereinstimmung abgleicht. Das Prüf- und / oder Komparatorergebnis kann dann an die Empfangseinheit des Terminals zurückgesendet werden. Somit lässt sich die Vorrichtung 100 nicht nur zur Erzeugung hochwertiger Passbilder sondern auch zum Identitätsabgleich nutzen.

Alternativ oder zusätzlich kann die insbesondere als Zugangskontrollvorrichtung ausgebildete Vorrichtung 100 auch derart ausgestaltet sein, dass diese eine Leseeinheit aufweist. Die Leseeinheit ist ausgebildet, die in einem Chip eines Personalausweises, eines Passes oder eines Dienstausweises, insbesondere kryptographisch abgesichert gespeicherten Daten auszulesen. Das Auslesen kann berührungslos, beispielsweise mittels Nahfeldkommunikation (NFC) erfolgen. Die auszulesenden Daten umfassen vorzugsweise Daten, insbesondere biometrische Daten zum Passbild der Person, so dass eine in der Vorrichtung 100 vorhandene Komparatoreinheit die optisch erfassten biometrischen Merkmale mit den aus dem Chip ausgelesenen Merkmalen vergleichen kann. Auch hiermit ist eine Identitätskontrolle ermöglicht.

Wenn die Vorrichtung 100 von der abzulichtenden Person selbst bedient werden kann, so hat sich die Einbindung eines in den Figuren ebenfalls gezeigten Sensors 120 zur Täuschungserkennung bewährt. Dieser Sensor 120 soll gewährleisten, dass Täuschungen beim Identifikationsvorgang maschinell erkannt und unterbunden werden. Vorliegend ist der Sensor 120 beispielhaft als eine Wärmebildkamera gebildet. Hierbei nimmt die Wärmebildkamera ein Wärmebild eines Gesichtsbereichs der Person auf, wobei die Auswerte- und / oder Steuereinheit 108 ausgebildet ist, eine örtliche Wärmeinhomogenität in einem vorbestimmten Erfassungsbereich des Wärmebilds zu detektieren. Alternativ oder ergänzend kann der Sensor 120 als eine Nahinfrarot-Kamera (NIR-Kamera) gebildet sein, um die *"presentation attack detection"* durchzuführen. Anhand eines durch eine NIR-Kamera aufgenommenen NIR-Bildes kann unterschieden werden, ob das Bild eine reale Person darstellt oder lediglich ein auf einem Wiedergabegerät (zum Beispiel einem Smartphone oder einem Tablet) dargestelltes Abbild einer Person zeigt. Denn über das NIR-Bild kann auch die Körperwärme oder die Blutzirkulation ermittelt werden, womit die NIR-Kamera ein hilfreiches Werkzeug für die *"presentation attack detection"* darstellt.

Zur Erzeugung von zumindest weitestgehend schattenfreien Aufnahmen, ist die gezeigte Rückwand 150 mit einer dem Gehäuse 101 zugewandten Vorderseite 152 gebildet, welche einen Lichtleiter umfasst, der ausgebildet ist, in ihn eingekoppeltes Licht über die Vorderseite 152 der Rückwand 150 auszukoppeln. Es ist zudem ein nicht näher dargestelltes Leuchtelement in Form von einer oder von mehreren LEDs vorhanden, welches mittels der Auswerte- und / oder Steuereinheit 108 ansteuerbar ist. Somit kann die Rückwand 150 beleuchtet werden, um einen schattenfreien Bildhintergrund im Gesichtsbild zu erzeugen. Das von der Rückwand 150 emittierte Licht ist ebenfalls durch punktierte Pfeile illustriert. Alternativ oder ergänzend kann die Rückwand 150 aber ausgebildet sein, um umgeschaltet zu werden zwischen einer Opak-Konfiguration, in welcher ein zumindest aus einem vorgegebenen Spektralbereich stammendes, auf eine Rückseite 151 der Rückwand 152 auftreffendes Licht absorbiert oder von der Rückseite 151 reflektiert wird, und einer Transmissions-Konfiguration, in welcher auf die Rückseite 151 der Rückwand 150 auftreffendes Licht zur Vorderseite 152 der Rückwand 150 transmittiert wird. Durch diese Ausgestaltung ist es beim Einsatz der Anordnung 400 in sicherheitsrelevanten Bereichen möglich, die Rückwand für das menschliche Auge durchsichtig zu schalten, so dass Sicherheitspersonal den sich hinter der Rückwand 150 befindenden Bereich einsehen können, wenn gerade kein Gesichtsbild mittels der Kamera 103 aufgezeichnet wird.

Der Abstand zwischen der Kamera 103 und dem Spiegel 104 sowie der Abstand zwischen dem optischen Spiegel 104 und dem Gesicht 110 sind dabei konstant zu halten. Deshalb wird bei einer vertikalen, d.h. entlang einer Parallelen zu der Gehäusefront 102 orientierten, Verstellung des Spiegels 104 zugleich die Kamera 103 vertikal um denselben Betrag verstellt. Hierzu kann eine vertikale Hubeinrichtung zur Verstellung der Kamera 103 und des optischen Spiegels 104 vorgesehen sein. In einer anderen Ausführungsform kann auch eine Hubeinrichtung zur vertikalen Verstellung des gesamten Gehäuses 101 vorgesehen sein, um den Spiegel 104 auf die Höhe des Gesichts 110 der zu erfassenden Person zu verstellen.

Wenigstens eines der folgenden Elemente der Vorrichtung 100 kann mit einer Dreh- oder Rotationseinrichtung gebildet sein, welche zum Einstellen einer jeweiligen Drehstellung genutzt werden kann, zum Beispiel um eine jeweilige Drehachse, die etwa senkrecht auf der Zeichnungsebene steht: Kamera 103, optischer Spiegel 104, Sensor 120, Übersichtskamera 130, erste Beleuchtungseinheit 141, zweite Beleuchtungseinheit 142,

Insgesamt zeichnet sich die beschriebene Technik unter anderem dadurch aus, dass Gesichtsbilder von Gesichtern von Personen unterschiedlichster Größe erfasst werden können, wobei verzerrungsfreie Portraitaufnahmen gewährleistet sind. Die Aufnahme erfolgt hierbei nahezu unabhängig von der Körpergröße oder der Sitzhöhe der Person. Außerdem ist die Anzahl an mechanischen Komponenten minimiert, was darüber hinaus eine einfache Bedienbarkeit der Vorrichtung 100 gewährleistet.

In einer Ausführungsform ist die Überwachungseinrichtung 130 mit einer 3D-Sensoreinrichtung gebildet, die eingerichtet ist, digitale Messdaten für eine räumliche Lage des Kopfes der Person zu erfassen, für die die Gesichtsaufnahme erfolgen soll.

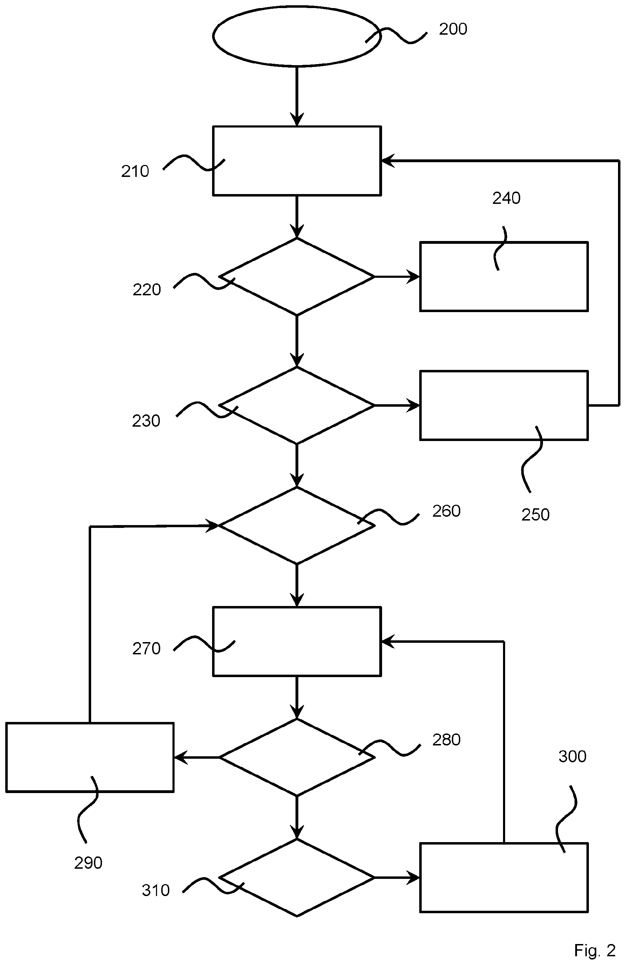

Unter Verwendung der 3D-Sensoreinrichtung kann in einem Ausführungsbeispiel ein Verfahren zum Bestimmen eines biometrischen Merkmals des Gesichts 110 ausgeführt werden, für das in Fig. 2 ein Ablaufdiagramm für eine Ausgestaltung schematisch gezeigt ist. Nach einem Start 200 werden mit Hilfe der 3D-Sensoreinrichtung Messdaten erfasst, die räumliche Lage des Kopfes anzeigen (Schritt 210). In Schritten 220, 230 wird mit Hilfe der Auswert- und / oder Steuereinrichtung 108, die an die 3D-Sensoreinrichtung datentechnisch koppelt ist, geprüft, ob die relative (räumliche) Lage des Kopfes (insbesondere Abstand und Höhe) zur Kamera 103 (und / oder zum Spiegel 104) einer vorgegebenen Positionierung (Sollposition) entspricht. Dieses kann als Fehlerprüfung ausgeführt werden.

Wenn ein Fehler oder eine Abweichung von der relativen Sollposition bestimmt wird, so erfolgt im Schritt 240 die Ausgabe eines Hinweises an die Person, den Abstand zur Kamera 103 oder der Vorderfront 102 zu verändern. Alternativ oder ergänzend kann im Schritt 250 bei der Abweichung von der Sollposition eine Höhenverstellung in vertikaler Richtung für den Spiegel 104 ausgeführt werden, wahlweise kombiniert mit einer Rotation.

Wird bei der Fehlerprüfung festgestellt, dass der Kopf innerhalb vorgebbarer Fehlertoleranzen in der Sollposition ist (Schritt 260), wird bei dem Ausführungsbeispiel nach Fig. 2 bestimmt, ob ein Parallaxenfehler für die Kamera 103 und das Gesicht 110 der Person vorliegt (Schritt 270). Ist dies der Fall, wird im Schritt 280 geprüft, ob eine automatische Korrektur der erfassten Bilddaten zum Korrigieren des Parallaxenfehlers möglich ist.

Die Prüfung auf einen möglichen Parallaxenfehler kann Teil der Fehlerprüfung betreffend die Positionierung des Kopfes der Person sein.

Alternativ oder ergänzend kann vorgesehen sein, den Parallaxenfehler zu korrigieren, indem im Schritt 290 ein Hinweis an die Person ausgegeben wird, den Kopf zu neigen oder zurückzunehmen. Auch kann alternativ oder ergänzend im Schritt 300 eine Verstellung der Aufnahmeeinrichtung mit Kamera 103 und / oder Spiegel 104 vorgesehen sein, nachdem im Schritt 310 (erneut) geprüft wurde, ob der Parallaxenfehler behoben ist. Wenn ja, kann die Bildaufnahme des Gesichts 110 erfolgen.

Mit dem vorangehend beschrieben Verfahrens wird insbesondere erreicht, dass für das Gesicht 110 und die Kamera 103 eine räumliche Anordnung eingestellt wird, bei der der Strahlengang sich im Wesentlichen entlang der Frankfurter Horizontalen erstreckt. Hierbei handelt es sich um eine gedachte Ebene in der Anatomie des menschlichen Schädels, die durch den tiefstgelegenen Punkt des Unterrandes der Augenhöhle und durch den höchsten Punkt des äußeren knöchernen Gehörgangs verläuft.

### Bezugszeichenliste

- 100: Vorrichtung
- 101: Gehäuse
- 102: Gehäusefront
- 103: Kamera
- 104: Spiegel (optisch)
- 105: Strahlengang
- 106: Anzeige
- 107: Bedieneinheit
- 108: Auswerte- und / oder Steuereinrichtung
- 110: Gesicht
- 120: Sensor
- 130: Übersichtskamera
- 131: zweiter Strahlengang
- 140: Beleuchtungseinrichtung
- 141: erste Beleuchtungseinheit
- 142: zweite Beleuchtungseinheit
- 150: Rückwand
- 151: Rückseite
- 152: Vorderseite
- 400: Anordnung
- 200,: ..., 300 Verfahrensschritte

## Patentansprüche

1. Vorrichtung zum Bestimmen eines biometrischen Merkmals eines Gesichts einer Person, mit:
- einer Kameraeinrichtung (103), die eingerichtet ist, Bilddaten für Bildaufnahmen eines Gesichts einer Person bereitzustellen;
- einer 3D-Sensoreinrichtung (120), die eingerichtet ist, digitale Messdaten betreffend eine räumliche Lage des Kopfes der Person zu erfassen; und
- einer Auswerte- und / oder Steuereinrichtung (108), die mit der Kameraeinrichtung (103) und der 3D-Sensoreinrichtung (120) zum Austauschen von Daten verbunden und eingerichtet ist,
- die Bilddaten von der Kameraeinrichtung (103) zu empfangen;
- die digitale Messdaten von der 3D-Sensoreinrichtung (120) zu empfangen;
- unter Verwendung der digitalen Messdaten eine relative Lage von Kameraeinrichtung (103) und Gesicht (110) der Person zueinander zu bestimmen;
- eine Fehlerprüfung auszuführen, bei der bestimmt wird, ob bezüglich der relativen Lage von Kameraeinrichtung (103) und Gesicht (110) der Person eine Abweichung von einer relativen Sollpositionierung vorliegt; und
- unter Verwendung der Bilddaten ein biometrisches Merkmal für das Gesicht (110) zu bestimmen, wobei hierbei eine automatische Datenkorrektur angewendet wird, wenn bei der Fehlerprüfung die Abweichung von der relativen Sollpositionierung von Kameraeinrichtung und Gesicht (110) der Person festgestellt wird.

2. Vorrichtung nach Anspruch 1, **dadurch gekennzeichnet, dass** die Auswerte- und / oder Steuereinrichtung (108) eingerichtet ist, bei der Fehlerprüfung zu bestimmen, ob ein Parallaxenfehler für Kameraeinrichtung (103) und Gesicht (110) der Person vorliegt, und die automatische Datenkorrektur den Parallaxenfehler korrigierend auszuführen, wenn dieser bei der Fehlerprüfung festgestellt wird.

3. Vorrichtung nach Anspruch 1 oder 2, **dadurch gekennzeichnet, dass** die Auswerte- und / oder Steuereinrichtung (108) eingerichtet ist, bei der Fehlerprüfung zu bestimmen, ob eine Aufnahmerichtung der Kameraeinrichtung (103) von der Frankfurter Horizontalen für die Person abweicht.

4. Vorrichtung nach mindestens einem der vorangehenden Ansprüche, **dadurch gekennzeichnet, dass** die Auswerte- und / oder Steuereinrichtung (108) eingerichtet ist, in Abhängigkeit vom Ergebnis der Fehlerprüfung Benutzerhinweisdaten, die Benutzerhinweise an die Person anzeigen, zu erzeugen und über eine Ausgabeeinrichtung an die Person auszugeben, wobei die Benutzerhinweisdaten wenigstens einen Benutzerhinweis aus der folgenden Gruppe anzeigen: Kopfabstand zur Kameraeinrichtung (103) vergrößern, Kopfabstand zur Kameraeinrichtung (103) verkleinern, Kopfneigung verändern und Kopf drehen.

5. Vorrichtung nach mindestens einem der vorangehenden Ansprüche, **dadurch gekennzeichnet, dass** die Auswerte- und / oder Steuereinrichtung (108) eingerichtet ist, in Abhängigkeit vom Ergebnis der Fehlerprüfung Steuerdaten zu erzeugen und an eine Höheneinstelleinrichtung der Kameraeinrichtung (103) zugeben, derart, dass die Steuerdaten eine automatische Höhenverstellung der Kameraeinrichtung (103) relativ zum Kopf der Person bewirken.

6. Verfahren zum Bestimmen eines biometrischen Merkmals eines Gesichts einer Person, mit:
- Erzeugen von Bilddaten in einer Kameraeinrichtung (103), die Bildaufnahmen eines Gesichts einer Person anzeigen;
- Erzeugen von digitalen Messdaten betreffend eine räumliche Lage des Kopfes der Person mittels einer 3D-Sensoreinrichtung (120); und
- Auswerten der Bilddaten und der digitalen Messdaten in einer Auswerte- und / oder Steuereinrichtung, die mit der Kameraeinrichtung (103) und der 3D-Sensoreinrichtung (120) verbunden ist, umfassend:
- Empfangen der Bilddaten von der Kameraeinrichtung (103);
- Empfangen der digitalen Messdaten von der 3D-Sensoreinrichtung (120);
- Bestimmen einer relativen Lage von Kameraeinrichtung (103) und Gesicht (110) der Person zueinander unter Verwendung der digitalen Messdaten;
- Ausführen einer Fehlerprüfung, bei der bestimmt wird, ob bezüglich der relativen Lage von Kameraeinrichtung (103) und Gesicht (110) der Person eine Abweichung von einer relativen Sollpositionierung vorliegt; und
- Bestimmen eines biometrischen Merkmals für das Gesicht (110) unter Verwendung der Bilddaten, wobei hierbei eine automatische Datenkorrektur angewendet wird, wenn bei der Fehlerprüfung die Abweichung von der relativen Sollpositionierung von Kameraeinrichtung (103) und Gesicht (110) der Person festgestellt wird.
